# EUROPÄISCHE PATENTSCHRIFT

(11) **EP 3 303 431 B1**
(45) Veröffentlichungstag und Bekanntmachung des Hinweises auf die Patenterteilung: **16.09.2020**
(21) Anmeldenummer: 16723122.4
(22) Anmeldetag: 18.05.2016
(51) Int. Cl.: C08G 18/48, C08G 18/58, C08G 18/22, C08G 18/32, C08G 18/40

(54) **POLYURETHAN-POLYISOCYANURATVERBINDUNG MIT HERVORRAGENDEN MECHANISCHEN EIGENSCHAFTEN**
POLYURETHANE POLYISOCYANURATE COMPOUND WITH EXCELLENT MECHANICAL PROPERTIES
LIAISON DE POLYISOCYANURATE-POLYURETHANE AYANT D'EXCELLENTES PROPRIETES MECANIQUES

(30) Priorität: 28.05.2015 EP 15169705
(43) Veröffentlichungstag der Anmeldung: 11.04.2018
(73) Patentinhaber: BASF SE, 67056 Ludwigshafen am Rhein (DE)
(72) Erfinder: GOESCHEL, Julia, 28201 Bremen (DE); BOKERN, Stefan, 200137 Pudong Shanghai (CN); STOLL, Ragnar, 49078 Osnabrueck (DE)
(74) Vertreter: BASF IP Association
(86) Internationale Anmeldenummer: PCT/EP2016/061060
(87) Internationale Veröffentlichungsnummer: WO 2016/188805

(56) Entgegenhaltungen:
- WO-A1-2010/121898
- WO-A1-2012/103965
- WO-A1-2015/078740

## Beschreibung

Die vorliegende Erfindung betrifft ein Verfahren zur Herstellung von Polyurethan-Polyisocyanuratverbindungen, bei dem man Polyisocyanat (a) mit einer Mischung, erhältlich durch Einbringen eines Alkali- oder Erdalkalimetallsalzes in eine Urethangruppen enthaltende Verbindung R-NH-CO-O-R', wobei R ungleich Wasserstoff und ungleich COR" ist (b), eine oder mehrere Epoxidgruppen enthaltende Verbindungen (c) und eine oder mehrere Verbindungen mit mindestens zwei gegenüber Isocyanat reaktiven Gruppen, enthaltend Verbindungen mit primären Amin- und/oder primären Alkohol-Gruppen (d) sowie gegebenenfalls Füllstoffe und weitere Additive (e) zu einer Reaktionsmischung vermischt und zu der Polyurethan-Polyisocyanuratverbindung ausreagieren lässt, wobei der molare Gehalt an Alkali- und/oder Erdalkalimetallionen in der Reaktionsmischung pro mol Urethangruppe in der Verbindung (b) 0,0001 bis 3,5 beträgt und der Isocyanatindex größer als 150 ist. Weiter betrifft die vorliegende Erfindung ein Verfahren zur Herstellung solcher Polyurethan-Polyisocyanuratverbindungen sowie deren Verwendung zur Herstellung von Fahrzeugteilen.

Insbesondere zur Herstellung großflächiger Kunststoffteile, beispielsweise Faserverbundstoffen, wird ein Kunststoffsystem benötigt, das eine lange offene Zeit aufweist. So können beispielsweise Verstärkungsmittel, wie Glas- oder Carbonfasern oder -fasermatten, vollständig benetzt werden und das Kunststoffsystem die Form vollständig ausfüllen bevor das Kunststoffsystem zum fertigen Kunststoff aushärtet. Ebenso wird aber auch gefordert, dass die Kunststoffsysteme möglichst schnell zum Kunststoff aushärten, so dass schnellere Entformzeiten möglich werden und damit die Rentabilität erhöht wird. Solche großflächigen Faserverbundstoffe werden beispielsweise im Automobil- oder Flugzeugbau oder bei der Herstellung von Rotorblättern von Windkraftanlagen eingesetzt. Eine weitere Forderung, insbesondere an Bauteile, die als Karosserieteile im Fahrzeugbau eingesetzt werden, ist eine hohe mechanische Beständigkeit und insbesondere Schlagzähigkeit. Dabei sind insbesondere gute mechanische Eigenschaften bei Produkten mit hohen Glastemperaturen gewünscht, um möglichst konstante mechanische Eigenschaften über einen breiten Temperaturbereich zu gewährleisten. In der Regel wird die geforderte lange offene Zeit nur durch Epoxidsysteme oder ungesättigte Polyestersysteme erreicht, diese benötigen aber in der Regel lange Zeiten zum Aushärten.

Übliche Herstellverfahren für solche großflächigen Kunststoffteile sind z.B. Handlaminieren, Spritzpressen, das Harzinjektionsverfahren, auch als Resin Transfer Moulding oder RTM bezeichnet, oder vakuumunterstützte Infusionsverfahren, beispielsweise das Vacuum Assisted Resin Transfer Moulding-Verfahren (VARTM) oder die Prepregtechnologie. Besonders bevorzugt sind vakuumunterstützte Infusionsverfahren, da damit große Bauteile schnell und qualitativ hochwertig hergestellt werden können.

Eine Möglichkeit zur Verlängerung der offenen Zeit bei schneller Aushärtung von Polyurethansystemen ist der Einsatz von säureblockierten Katalysatoren. So beschreibt EP 2257580 den Einsatz von säureblockierten Aminkatalysatoren in Polyurethansystemen zur Herstellung von Sandwichbauteilen. Säureblockierte Katalysatoren ermöglichen bei akzeptabel kurzen Entformzeiten allerdings nur eine Verlängerung der Verarbeitungszeit im Bereich von Minuten. Gefordert wird dagegen eine Verarbeitungszeit von bis zu mehreren Stunden.

In WO 2013057070 wird die Herstellung von faserverstärkten Polyisocyanuratbauteilen beschrieben, wobei als Katalysator ein latent-reaktiver Trimerisierungskatalysator eingesetzt wird. Nachteile dieser Bauteile ist eine immer noch recht kurze offene Zeit bei Raumtemperatur sowie eine hohe Sprödigkeit.

In WO 10121898 wird eine Polyisocyanat Komponente beschrieben, die in Teilen aus einem bezüglich des Anions bidentalen Harnstoff-Prepolymer (-NH-CO-NH-) besteht, das mit Lithiumchlorid gemischt wurde. Mischt man diese Komponente mit einer Epoxid und Polyol enthaltenden zweiten Komponente und erwärmt diese Mischung auf 80-90° C, findet eine rasche Reaktion statt, die zu einer Durchhärtung des Materials führt.

WO 12103965 beschreibt ein Epoxy-basiertes System, das auf der gleichen Katalyse wie in WO 10121898 beschrieben basiert. Die für die Katalyse notwendige Gruppen werden hier über die zwei am Stickstoff befindlichen H-Atome als bezüglich des Anions bidentale Carboxamid Gruppe (-CO-NH₂) mit LiCI definiert.

WO 13098034 umfasst eine reaktive Mischung, die neben Lithium-Halogenid eine bezüglich des Kations bidentale -(-CO-NH-CO-)- Gruppe erfordert. Die in dieser Schrift beschriebene Harnstoffkomponente kann auch polydentale Biuret Gruppen (-NH-CO-NH-CO-NH-) enthalten.

In WO 13143841 wird ein Trimerisierungskatalysator bestehend aus Alkali- oder Erdalkalisalzen in Kombination mit gegenüber dem Anion bidentalen Carboxamidgruppen der Struktur -CO-NH2 oder in Kombination mit Gruppen -(-CO-NH-CO-)-, die sich bezüglich des Kations bidental verhalten, beschrieben.

Nachteilig an den in WO 10121898, WO 12103965 WO 13098034 und WO 13143841 beschriebenen Systemen ist, dass der Harnstoff, Carboxylat oder Biuret- geblockte Katalysator in relativ großen Mengen zugegeben werden muss, um ausreichend wirksam zu sein. Die erhaltenen Materialien sind relativ spröde.

Aufgabe der vorliegenden Erfindung war es daher ein Kunststoffsystem, insbesondere ein Reaktivsystem zur Herstellung einer Isocyanat-Polyadditionsverbindung zu liefern, das bei der Herstellung eine lange offene Zeit bei Raumtemperatur aufweist, und bei erhöhter Temperatur innerhalb von wenigen Minuten aushärten kann. Dabei sollte die Katalyse eine hohe Effektivität, insbesondere im Vergleich zu WO 10121898, WO 12103965 WO 13098034 und WO 13143841 aufweisen.

Die erfindungsgemäße Aufgabe wird gelöst durch ein Verfahren zur Herstellung von Polyurethan-Polyisocyanuratverbindungen, bei dem man Polyisocyanat (a) mit einer Mischung, erhältlich durch Einbringen eines Alkali- oder Erdalkalimetallsalzes in eine Urethangruppen enthaltende Verbindung R-NH-CO-O-R', wobei R ungleich Wasserstoff und ungleich COR" ist (b), eine oder mehrere Epoxidgruppen enthaltende Verbindungen (c) und eine oder mehrere Verbindungen mit mindestens zwei gegenüber Isocyanat reaktiven Gruppen, enthaltend Verbindungen mit NH₂ und/oder primären OH-Gruppen (d) sowie gegebenenfalls Füllstoffe und weitere Additive (e) zu einer Reaktionsmischung vermischt und zu der Polyurethan-Polyisocyanuratverbindung ausreagieren lässt, wobei der molare Gehalt an Alkali- und/oder Erdalkalimetallionen in der Reaktionsmischung pro mol Urethangruppe in der Verbindung (b) 0,0001 bis 3,5 beträgt und der Isocyanatindex größer als 150 ist. Weiter ist Gegenstand der vorliegenden Erfindung eine Polyurethan-Polyisocyanuratverbindung, erhältlich durch ein solches Verfahren sowie deren Verwendung zur Herstellung von Fahrzeugteilen oder bei der Herstellung von Rotorblättern für Windkraftanlagen.

Polyisocyanate (a), im Folgenden auch als erstes Isocyanat (a) bezeichnet, umfassen alle zur Herstellung von Polyurethanen bekannten aliphatischen, cycloaliphatischen und aromatischen Isocyanate. Diese weisen vorzugsweise eine mittlere Funktionalität von kleiner 2,5 auf. Beispiele sind 2,2' -, 2,4' - und 4,4' -Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Vorzugsweise werden als Polyisocyanate (a) monomeres Diphenylmethandiisocyanat, beispielsweise 2,2'- Diphenylmethandiisocyanat, 2,4'- Diphenylmethandiisocyanat, 4,4'-Diphenylmethandiisocyanat oder Mischungen daraus eingesetzt. Dabei kann Diphenylmethandiisocyanat auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid-, uretdion-, oder uretoniminmodifiziertes Diphenylmethandiisocyanat, insbesondere carbodiimidmodifiziertes Diphenylmethandiisocyanat, enthalten.

Polyisocyanate (a) können auch in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 ° C, bevorzugt bei etwa 80° C, mit Polyolen (Bestandteil (a-2)), zum Prepolymer umgesetzt werden. Der NCO-Gehalt erfindungsgemäßer Polyisocyanatprepolymere beträgt vorzugsweise von 5 bis 32 Gew.-% NCO, besonders bevorzugt von 15 bis 28 Gew.-% NCO. Polyole (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polyole Polyether- oder Polyesterole, wie die nachfolgend unter (d) beschriebenen Polyole, eingesetzt werden. Vorzugsweise werden als Polyole (a-2) Polyole, enthaltend sekundäre OH-Gruppen, eingesetzt, wie beispielsweise Polypropylenoxyd. Die Polyole (a-2) besitzen dabei vorzugsweise eine Funktionalität von 2 bis 6, besonders bevorzugt von 2 bis 4 und insbesondere 2 bis 3. Weiter können die Polyole (a-2) Polyesterole, enthaltend hydrophobe Stoffe, wie unter (b) beschrieben, enthalten.

Gegebenenfalls können der Umsetzung zum Polyisocyanatprepolymer noch Kettenverlängerungsmittel (a-3) zugegeben werden. Als Kettenverlängerungsmittel (a-3) für das Prepolymer sind zwei- oder dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Dipropylenglycol, geeignet. Geeignete Kettenverlängerer sind auch unter (d) beschrieben.

Solche Polyisocyanatprepolymere sind beispielsweise in US 3883571, WO 02/10250 und US 4229347 beschrieben.

Besonders bevorzugt wird als Polyisocyanat (a) Diphenylmethandiisocyanat oder ein Polyisocyanatprepolymer auf Basis von monomerem 4,4'- Diphenylmethandiisocyanat oder Mischungen von 4,4'- Diphenylmethandiisocyanat mit dessen Derivaten und Polypropylenoxid mit einer Funktionalität von 2 bis 4 sowie gegebenenfalls Dipropylenglycol eingesetzt.

Als Komponente (b) wird eine Mischung, erhältlich durch Einbringen eines Alkali- oder Erdalkalimetallsalzes in eine Urethangruppen enthaltende Verbindung, eingesetzt.

Dabei wird als Alkali- oder Erdalkalimetallsalz eine Verbindung eingesetzt, die die Reaktion zwischen Isocyanaten (a), der eine oder mehrere Epoxidgruppen enthaltende Verbindungen (c) und gegebenenfalls Polyolen (d) beschleunigt. Diese Verbindungen umfassen insbesondere Salze von Natrium, Lithium, Magnesium und Kalium und Ammoniumverbindungen, vorzugsweise Lithium oder Magnesium, mit beliebigen Anionen, vorzugsweise mit Anionen organischer Säuren wie Carboxylaten und mehr bevorzugt anorganischer Säuren, wie Nitraten, Halogeniden, Sulfaten, Sulfiten, und Phosphaten, noch mehr bevorzugt mit Anionen einprotoniger Säuren, wie Nitraten oder Halogeniden und insbesondere Nitraten, Chloriden, Bromiden oder Iodiden. Auch Alkalimetallhydroxyde können eingesetzt werden. Besonders bevorzugt werden Lithiumchlorid, Lithiumbromid und Magnesiumdichlorid und insbesondere Lithiumchlorid eingesetzt. Erfindungsgemäße Alkali- oder Erdalkalimetallsalze können einzeln oder als Mischungen eingesetzt werden.

Vorzugsweise werden neben dem Alkali- oder Erdalkalimetallsalz keine weiteren Verbindungen eingesetzt, die die Reaktion von Isocyanaten mit gegenüber Isocyanaten reaktiven Gruppen beschleunigen.

Als Urethangruppen enthaltende Verbindung (b) werden beliebige Verbindungen verstanden, die bei 20° C fest oder flüssig vorliegen und mindestens eine Urethangruppe R-NH-CO-O-R' enthalten. R und R' stehen dabei für organische Reste wobei R ungleich Wasserstoff und ungleich COR" ist. R und R' stehen vorzugsweise unabhängig voneinander für substituierte oder unsubstituierte Kohlenwasserstoffreste mit vorzugsweise 1 bis 50 Kohlenstoffatomen. Vorzugsweise ist die Urethangruppen enthaltende Verbindung in Komponente (b) dabei erhältlich durch Umsetzung eines zweiten Polyisocyanats und einer Verbindung mit mindestens einer OH-Gruppe. Bevorzugt sind hierbei Verbindungen die bei 50° C, besonders bevorzugt bei Raumtemperatur flüssig sind. Dabei ist im Rahmen der vorliegenden Erfindung unter einer "flüssigen" Substanz oder Komponente eine solche zu verstehen, die bei der angegebenen Temperatur eine Viskosität von maximal 10 Pas aufweist. Ist keine Temperatur angegeben, bezieht sich die Angabe auf 20° C. Die Messung erfolgt dabei nach ASTM D445-11. Vorzugsweise weisen die Urethangruppen enthaltenden Verbindungen mindestens zwei Urethangruppen auf. Dabei liegt das Molekulargewicht der Urethangruppen enthaltenden Verbindungen vorzugsweise im Bereich von 200 bis 15.000 g/mol, besonders bevorzugt 300 bis 10.000 g/mol und insbesondere 500 bis 1.300 g/mol. Urethangruppen enthaltende Verbindungen können beispielsweise erhalten werden durch Reaktion von oben genannten Isocyanaten (a1) als zweites Isocyanat mit Verbindungen, die mindestens ein gegenüber Isocyanaten reaktives Wasserstoffatom aufweisen, wie Alkohole, beispielsweise Monoalkohole, wie Methanol, Ethanol, Propanol, Butanol, Pentanol, Hexanol oder längerkettige propoxylierte oder ethoxylierte Monoole, wie Poly(ethyleneoxid)monomethylether, wie z.B. die monofunktionellen Pluriol® Typen der Fa. BASF, Dialkohole, wie Ethylenglycol, Diethylenglycol, Triethylenglycol, Propylenglycol, Dipropylenglycol, Butandiol, Hexandiol, und/oder Reaktionsprodukte genannter Isocyanate mit den unten beschriebenen Polyole und/oder Kettenverlängerer (d) - einzeln oder in Mischungen. Dabei können zur Herstellung der Urethangruppen haltigen Verbindung sowohl Isocyanate als auch Polyole im stöchiometrischen Überschuss eingesetzt werden. Werden Monoalkohole eingesetzt, können Isocyanatgruppen und OH-Gruppen auch im stöchiometrischen Verhältnis eingesetzt werden. Vorzugsweise werden Monoalkohole verwendet. Weist die urethangruppenhaltige Verbindung zwei oder mehr Isocyanatgruppen pro Molekül auf, können diese die Polyisocyanate (a) ganz oder teilweise ersetzen. Die Umsetzung erfolgt üblicherweise bei Temperaturen zwischen 20 und 120° C, beispielsweise bei 80° C. Das zur Herstellung der Urethangruppen enthaltenden Verbindung eingesetzte zweite Isocyanat ist vorzugsweise ein Isomeres oder Homologes von Diphenylmethandiisocyanat. Besonders bevorzugt ist das zweite Isocyanat monomeres Diphenylmethandiisocyanat, beispielsweise 2,2'- Diphenylmethandiisocyanat, 2,4'- Diphenylmethandiisocyanat, 4,4'- Diphenylmethandiisocyanat oder eine Mischungen daraus. Dabei kann Diphenylmethandiisocyanat auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid-, uretdion-, oder uretoniminmodifiziertes Diphenylmethandiisocyanat, insbesondere carbodiimidmodifiziertes Diphenylmethandiisocyanat, enthalten. In einer besonders bevorzugten Ausführungsform sind das erste Isocyanat (a) und das zweite Isocyanat zur Herstellung der Urethangruppen haltigen Verbindung identisch.

Die Urethangruppen haltige Verbindung kann auch über alternative Reaktionswege erhalten werden, so zum Beispiel in dem ein Carbonat mit einem Monoamin zur Reaktion gebracht wird und eine Urethangruppe entsteht. Hierfür wird beispielsweise ein Propylencarbonat in leichtem Überschuß (1.1 eq.) mit einem Monoamin, z.B. einem Jeffamin M 600, bei 100° C zur Reaktion gebracht. Das entstehende Urethan kann ebenfalls als Urethangruppe enthaltende Verbindung eingesetzt werden.

Die Mischungen enthaltend das Alkali- oder Erdalkalimetallsalze und eine Urethangruppen enthaltende Verbindung können beispielsweise durch Mischen des Alkali- oder Erdalkalimetallsalz in die Urethangruppen enthaltende Verbindung, vorzugsweise in flüssigem Zustand, beispielsweise bei Raumtemperatur oder bei erhöhter Temperatur, erhalten werden. Dazu kann jeder Mischer, beispielsweise ein einfacher Rührer, eingesetzt werden. Das Alkali- oder Erdalkalimetallsalz kann in diesem Fall als Reinsubstanz oder in Form einer Lösung, beispielsweise in ein- oder mehrfunktionellen Alkoholen, wie Methanol, Ethanol oder Kettenverlängerer, oder Wasser, eingesetzt werden. In einer besonders bevorzugten Ausführungsform wird dabei kommerziell erhältliches Prepolymer-basiertes Isocyanat direkt mit dem gelösten Salz versetzt. Hierfür geeignet sind z.B. Isocyanatprepolymere mit einem NCO-Gehalt von 15 bis 30 %, insbesondere auf Basis von Diphenylmethandiisocyanat und einem Polyetherpolyol. Solche Isocyanate sind beispielsweise kommerziell erhältlich von der BASF unter dem Handelsnamen Lupranat® MP 102.

In einer besonders bevorzugten Ausführungsform der vorliegenden Erfindung wird das Alkali- oder Erdalkalimetallsalz in einer Verbindung mit gegenüber Isocyanat reaktiven Wasserstoffatomen gelöst und anschließend, gegebenenfalls bei erhöhter Temperatur, mit dem Isocyanat vermischt.

Besonders bevorzugt wird zur Herstellung der Urethangruppenhaltigen Verbindung ein Monool mit einem Molekulargewicht von 30 bis 15 000 g/mol, bevorzugt 100 bis 900 g/mol und in einer besonders bevorzugten Ausführung von 400 bis 600 g/mol eingesetzt

Der molare Gehalt an Alkali- oder Erdalkalimetallionen pro mol Urethangruppe in der Verbindung (b) beträgt dabei 0,0001 bis 3,5, bevorzugt 0,01 bis 1,0, besonders bevorzugt 0,05 bis 0,9 und insbesondere 0,3 bis 0,8.

Der molare Gehalt an Alkali- oder Erdalkalimetallionen pro mol Isocyanatgruppe im ersten Polyisocyanat (a) sowie, falls vorhanden in der Komplexverbindung (b), beträgt vorzugsweise 0,0001 bis 0,3 besonders bevorzugt 0,0005 bis 0,02 und insbesondere 0,001 bis 0,01.

Dabei besteht zwischen dem Alkali- oder Erdalkalimetallsalz in der Mischung (b) vorzugsweise bei 25° C eine thermisch reversible Interaktion mit den urethangruppenhalteigen Verbindungen als Komponente (b), während bei Temperaturen größer 50° C, vorzugsweise von 60 bis 200° C und insbesondere von 80 bis 200° C die katalytisch aktive Verbindung frei vorliegt. Im Sinn der Erfindung wird dabei von einer thermisch reversiblen Interaktion ausgegangen, wenn die offene Zeit der Reaktionsmischung bei 25° C mindestens um den Faktor 5, besonders bevorzugt mindestens um den Faktor 10 und insbesondere mindestens um den Faktor 20 länger ist als bei 130° C. Dabei wird die Offene Zeit bestimmt als die Zeit, in der die Viskosität der Reaktionsmischung bei konstanter Temperatur sich soweit erhöht, dass die erforderliche Rührkraft die gegebene Rührkraft des Shyodu Gel Timers, Typ 100, Version 2012 übersteigt. Hierzu wurden jeweils 200 g Reaktionsmischung angesetzt, in einem Speedmixer bei 1950 rpm 1 min vermischt und 130 g der Mischung bei Raumtemperatur oder erhöhter Reaktionstemperatur im Ofen in einem PP-Kunststoffbecher mit Durchmesser 7 cm mittels einem Shyodu Gel-Timer, Typ 100, Version 2012 und einem dazugehörigen Drahtrührer bei 20 rpm gerührt, bis die Viskosität und damit die erforderliche Rührkraft für die reaktive Mischung die Rührkraft des Gel-Timers überstieg.

Als eine oder mehrere Epoxidgruppen enthaltende Verbindung (c) können alle Epoxidhaltigen Verbindungen eingesetzt werden, die üblicherweise zur Herstellung von Epoxidharzen eingesetzt werden. Vorzugsweise sind die Epoxidgruppen enthaltende Verbindungen (c) bei 25° C flüssig. Dabei können auch Mischungen solcher Verbindungen eingesetzt werden, diese sind vorzugsweise ebenfalls bei 25° C flüssig.

Beispiele für solche Epoxidgruppen haltigen Verbindungen, die im Rahmen der Erfindung eingesetzt werden können sind
I) Polyglycidyl and Poly([beta]-methylglycidyl) ester, erhältlich durch Reaktion einer Verbindung mit mindestens zwei Carboxylgruppen im Molekül und jeweils Epichlorohydrin und [Beta]-methylepichlorohydrin. Dabei wird die Reaktion vorteilhafterweise durch die Anwesenheit von Basen katalysiert.
   Aliphatische Polycarbonsäuren können beispielsweise als Verbindung mit mindestens zwei Carboxylgruppen eingesetzt werden. Beispiele für solche aliphatischen Polycarbonsäuren sind Oxalsäure, Bernsteinsäure, Glutarsäure, Adipinsäure, Pimelinsäure, Korksäure, Azelainsäure und dimerisierte oder trimerisierte Linolsäure. Weiter könne auch cyclische, aliphatische Säuren, wie Tetrahydrophthalsäure, 4-Methyltetrahydrophthalsäure, Hexahydrophthalsäure oder 4-Methylhexa hydrophthalsäure eingesetzt werden. Auch aromatische Carbonsäuren, wie Phthalsäure, Isophthalsäure oder Terephthalsäure sowie beliebige Mischungen dieser Carbonsäuren können eingesetzt werden.
II) Polyglycidyl oder Poly([beta]-methylglycidyl) ether, erhältlich durch Reaktion einer Verbindung mit mindestens zwei Alkohol-Hydroxylgruppen und/oderphenolischen Hydroxylgruppen mit Epichlorohydrin oder [Beta]-methylepichlorohydrin unter alkalischen Bedingungen oder in Gegenwart eines sauren Katalysators und anschließender Behandlung mit einer Base.
   Die Glycidylether diesen Typs sind beispielsweise abgeleitet von linearen Alkoholen, wie Ethylenglycol, Diethylenglycol oder hoheren Poly(oxyethylen)glycolen, Propan-1,2-diol oder Poly(oxypropylen)glycolen, Propan-1,3-diol, Butan-1,4-diol, Poly(oxytetramethylen)glycol, Pentan-1,5-diol, Hexan-1,6-diol, Hexan-2,4,6-triol, Glycerin, 1,1,1-Trimethylolpropan, Pentaerythritol oder Sorbitol, und von Polyepichlorohydrinen.
   Weitere Glycidylether diesen Typs sind erhältlich von cycloaliphatischen Alkoholen, wie 1,4-Cyclohexanedimethanol, Bis(4-hydroxycyclohexyl)methan oder 2,2-Bis(4-hydroxycyclohexyl)propan, oder von Alkoholen, die aromatische Gruppen und/oder weitere funktionale Gruppen tragen, wie N,N-Bis(2-hydroxyethyl)anilin oder p,p'-Bis(2- hydroxyethylamino)-diphenylmethan.
   Die Glycidylether können auch auf einkernigen Phenolen basiert sein, wie p-Tert-butylphenol, Resorcinol oder Hydrochinon, oder auf mehrkernigen Phenolen, wie Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan oder 2,2-Bis(3,5-dibromo-4-hydroxyphenyl) propan.
   Weitere Hydroxygruppenhaltige Verbindungen, die zur Herstellung der Glycidylether geeignet sind sind Novolake, erhältlich durch Kondensation von Aldehyden, wie Formaldehyd, Acetaldehyd, Chloral- oder Furfuraldehyd, mit Phenolen oder Bisphenolen, die unsubstituiert oder substituiert sein können, beispielsweise mit Chloratomen oder C1 bis C9-Alkylgruppen, wie, Phenol, 4-Chlorophenol, 2- Methylphenol oder 4-Tert-butylphenol.
III) Poly(N-glycidyl)-Verbindungen, erhältlich durch Dehydrochlorierung von Reaktionsprodukten aus Epichlorohydrin mit Aminen, die zumindest zwei amingebundene Wasserstoffatome enthalten. Solche Amine sind beispielsweise Anilin, n-Butylamin, Bis(4-aminophenyl)methan, m-Xylylendiamin oder Bis(4-methylaminophenyl)methan. Die Poly(N-glycidyl)-Verbindungen schließen auch Triglycidylisocyanurate, N,N'-Diglycidylderivate von Cycloalkylenharnstoffen, wie Ethylenharnstoff oder 1,3-Propylenharnstoff, und Diglycidylderivate von Hydantoine, wie 5,5-Dimethylhydantoin.
IV) Poly(S-glycidyl)-Verbindungen, wie Di-S-glycidyl derivate, die erhältlich sind von Dithiolen, beispielsweise Ethan- 1,2-dithiol oder Bis(4-mercaptomethylphenyl)ether.
V) Cycloaliphatische Epoxyharze, wie Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexanecarboxylat.
VI) Monofunktionelle Epoxydharze, wie (2-Ethylhexyl)-glycidether, Isopropylglycidether, Butylglycidether oder Kresylglycidylether.

Es ist im Rahmen der Erfindung ebenfalls möglich Epoxyharze einzusetzen, bei denen die 1,2-Epoxygruppe an unterschiedliche Heteroatome oder funktionelle Gruppen gebunden ist. Diese Verbindungen schließen N,N,O-Triglycidyl-Derivate von 4-Aminophenol, die Glycidylether-glycidylester von Salicylsäure, N-Glycidyl-N'-(2-glycidyloxypropyl)-5,5-dimethylhydantoin und 2- Glycidyloxy-1,3-bis(5,5-dimethyl-1-glycidylhydantoin-3-yl)propan ein.

Besonders bevorzugt als Komponente (c) sind die Verbindungen der Klassen (I) und (II), insbesondere die der Klasse (II).

Vorzugsweise wird die eine oder mehrere Epoxidgruppen enthaltende Verbindung (c) in einer Menge eingesetzt, dass das Equivalentverhältnis von Epoxidgruppe zu Isocyanatgruppe der Polyisocyanate (a) sowie gegebenenfalls in der Komplexverbindung (b) enthaltenen Isocyanatgruppen 0,1 bis 2,0, vorzugsweise 0,2 bis 1,8 und besonders bevorzugt 0,3 bis 1,0 beträgt. Dabei führt ein höherer Epoxidanteil zu einer höheren Exothermie und damit in der Regel zu einer schnelleren Aushärtung bei erhöhter Temperatur und umgekehrt.

Der molare Gehalt an Alkali- oder Erdalkalimetallionen pro mol Epoxygruppe ist vorzugsweise größer als 0,00001 und beträgt besonders bevorzugt 0,00005 bis 0,3.

Als Verbindungen mit mindestens zwei gegenüber Isocyanat reaktiven Gruppen, enthaltend Verbindungen mit NH₂ und/oder primären OH-Gruppen (d) können beliebige, in der Polyurethanchemie bekannte Verbindungen mit mindestens zwei gegenüber Isocyanat reaktiven Gruppen eingesetzt werden. Diese Umfassen höhermolekulare Verbindungen mit einem Molekulargewicht von mindestens 350 g/mol, mindestens 400 g/mol und besonders bevorzugt mindestens 500 g/mol, beispielsweise Polyamine, und Polyole, wie Polyetherole und Polyesterole. Liegt eine Molekulargewichtsverteilung vor, ist im Rahmen der vorliegenden Erfindung von zahlenmittleren Molekulargewicht auszugehen, es sei denn, dass explizit etwas anderes genannt ist. Neben höhermolekularen Verbindungen mit mindestens zwei gegenüber Isocyanat reaktiven Gruppen können in der Komponente (d), beispielsweise zur Modifizierung der mechanischen Eigenschaften, z.B. der Härte, der Zusatz von Kettenverlängerungsmitteln, Vernetzungsmitteln oder gegebenenfalls auch Gemischen davon eingesetzt werden.

Werden niedermolekulare Kettenverlängerungsmittel und/oder Vernetzungsmittel eingesetzt, können bei der Herstellung von Polyurethanen bekannte Kettenverlängerer eingesetzt werden. Dies sind vorzugsweise niedermolekulare Verbindungen mit mindestens zwei gegenüber Isocyanaten reaktiven Gruppen mit Molekulargewichten kleiner als 350 g/mol, besonders bevorzugt von 60 bis kleiner als 35 g/mol. In Betracht kommen beispielsweise aliphatische, cycloaliphatische und/oder araliphatische oder aromatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben. Vorzugsweise werden weniger als 50 Gew.-%, besonders bevorzugt 5 bis 30 Gew.-%, mehr bevorzugt 10 bis20 Gew.-%, jeweils bezogen auf das Gesamtgewicht der Verbindungen der Komponenten (b) an Kettenverlängerer und/oder Vernetzungsmittel, eingesetzt.

Als Polyole können in der Verbindung (d) beispielsweise in der Polyurethanchemie bekannte Polyether, Polycarbonatpolyole oder Polyester eingesetzt werden. Die bevorzugt zur Anwendung kommenden Polyole sind Polyetherpolyole und/oder Polyesterole mit zahlenmittleren Molekulargewichten zwischen 350 und 12000, bevorzugt 400 bis 6000, insbesondere 500 bis weniger als 3000, und bevorzugt einer mittleren, nomionalen Funktionalität von 2 bis 6, bevorzugt 2 bis 3. Dabei werden die zahlenmittleren Molekulargewichte üblicherweise über die Bestimmung der OH Zahl gemäß DIN 53240 und anschließender Berechnung nach der Formel Mₙ= Fn ^{∗} 1000 ^{∗} 56,1 / OH-Zahl erhalten, wobei als Funktionalität die nominale Funktionalität verwendet wird.

Gewöhnlich werden Polyetherpolyole und/oder Polyesterole mit 2 bis 8 mit Isocyanat reaktiven Wasserstoffatomen eingesetzt. Die OH-Zahl dieser Verbindungen liegt üblicherweise im Bereich von 20 bis 850 mg KOH /g, vorzugsweise im Bereich von 50 und 600 mg KOH/g.

Die Polyetherpolyole werden nach bekannten Verfahren, beispielsweise durch anionische Polymerisation von Alkylenoxiden unter Zusatz mindestens eines Startermoleküls, das 2 bis 8, vorzugsweise 2 bis 6 und besonders bevorzugt 2 bis 4 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden. Für Polyetherpolyole mit Hydroxyzahlen > 200 mg KOH/g kann als Katalysator auch ein tertiäres Amin, wie zum Beispiel Imidazol, eingesetzt werden. Solche Polyole werde beispielsweise in WO 2011/107367 beschrieben.

Vorzugsweise werden als Alkylenoxide eine oder mehrere Verbindungen mit 2 bis 4 Kohlenstoffatomen im Alkylenrest, wie Ethylenoxid, Tetrahydrofuran, 1,2-Propylenoxid, oder 1,2-bzw. 2,3-Butylenoxid, jeweils alleine oder in Form von Mischungen, und vorzugsweise Ethylenoxid, 1,2-Propylenoxid, 1,2 Butylenoxid und/oder 2,3-Butylenoxid, insbesondere Ethylenoxid und/oder 1,2-Propylenoxid eingesetzt.
Als Startermoleküle kommen beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die eingesetzten Polyesteralkohole werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und den Isomeren von Naphthalindicarbonsäuren oder deren Anhydriden, hergestellt.

Als weitere Ausgangsstoffe bei der Herstellung der Polyester können auch hydrophobe Stoffe mitverwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol-%, besonders bevorzugt 4 bis 15 Mol-%.

Die eingesetzten Polyesterole haben vorzugsweise eine Funktionalität von 1,5 bis 5, besonders bevorzugt 1,8 - 3,5.

Zur Herstellung besonders hydrophober Reaktionsmischungen, beispielsweise wenn das Einkondensieren von Wasser während der langen offenen Zeit verhindert werden soll oder wenn die erfindungsgemäße Polyurethan-Polyisocyanuratverbindung besonders hydrolysestabil sein soll, kann als Polyol auch eine hydroxylfunktionalisierte hydrophobe Verbindung, wie eine hydroxyfunktionalisierte fettchemische Verbindung, eingesetzt werden.

Es sind eine Reihe von hydroxylfunktionellen fettchemischen Verbindungen bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen® 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma BASF unter der Produktbezeichung Sovermole® angeboten.

Als Verbindungen mit -NH₂-Gruppen werden vorzugsweise Polyoxyalkylenamine, sogenannte Polyetheramine, eingesetzt. Solche Polyoxyalkylenamine sind vorzugsweise aminterminierte di- beziehungsweise höherfunktionellen Polyalkylenoxide, in der Regel Polyoxyethylen- beziehungsweise Polyoxypropylenoxide, mit zahlenmittleren Molekulargewichten von mindestens 350 g/mol, beispielsweise zwischen 350 und 6000 g mol⁻¹, bevorzugt von 380 bis 5100 g mol⁻¹. Möglich ist auch der Einsatz von aminterminiertem Polytetrahydrofuran (PTHF). Die Amingruppen der Polyetheramine sind primäre Amingruppen. Es kann auch nur ein einziges Polyetheramin verwendet werden. Die Polyetheramine (b) sind insbesondere Diamine oder Triamine. Derartige Verbindungen werden beispielsweise von der Firma Huntsman unter der Bezeichnung Jeffamine® bzw. von der Firma BASF als Polyetheramine unter dem Namen Baxxodur® vertrieben.

Zumeist werden Polyamine durch katalytische Aminierung der entsprechenden Polyalkohole hergestellt. Die Herstellung der Polyetheralkohole und Polyesteralkohole, die vorzugsweise aminiert werden, ist bereits oben bei der Beschreibung der Komponente (a2) offenbart. Insbesondere werden 2 oder 3-Funktionelle Polypropylenoxyde zu entsprechenden Di- oder Triaminen umgesetzt.

Dabei ist es erfindungswesentlich, dass die Verbindungen mit mindestens zwei gegenüber Isocyanat reaktiven Gruppen, Verbindungen mit-NH₂-Gruppen oder OH-Gruppen (d) enthalten. Besonders bevorzugt enthält die Komponente (d) Polyetherpolyol mit im Mittel mindestens 50 %, beispielsweise 50% bis 100%, besonders bevorzugt 75% bis 100% und insbesondere 90% bis 100% primären OH-Gruppen. Insgesamt beträgt der Anteil an -NH₂-Gruppen und primären -OH-Gruppen an der Summe an NH2-Gruppen und OH-Gruppen in der Komponente (d) mindestens 50%, besonders bevorzugt mindestens 75 % bis 100%, mehr bevorzugt 85 bis 100% und insbesondere 95 bis 100%. Bevorzugt enthält die Komponente (d) weniger als 50 %, besonders bevorzugt weniger als 20% und insbesondere keine NH₂-Gruppen, bezogen auf die Summe der NH₂-Gruppen und OH-Gruppen in der Komponente (d).

In einer besonders bevorzugten Ausführungsform enthält die Komponente (d) mindestens 80 Gew.-% Polyether, besonders bevorzugt 90 bis 100 % Gew.-% Polyether, bezogen auf das Gesamtgewicht der Verbindungen der Komponente (d). Insbesondere bei der Polyetherherstellung ist darauf zu achten, dass alkalisch hergestellte Polyether keinen wesentlichen Rest an Katalysator enthalten. Vorzugsweise ist der Restgehalt an Alkalimetall in der Komponente (d) kleiner als 100 ppm, besonders bevorzugt kleiner als 50 ppm, mehr bevorzugt kleiner als 20 ppm und insbesondere kleiner als 10 ppm.

Dabei beträgt der Anteil der Verbindungen der Komponente (d), bezogen auf das Gesamtgewicht der Komponenten (c) und (d) vorzugsweise von 10 bis 95 Gew.-%, besonders bevorzugt von 40 bis 85 Gew.-% und insbesondere von 60 bis 80 Gew.-%.

Vorzugsweise enthält die Komponente (d) weniger als 0,01 Gew.-%, bezogen auf das Gesamtgewicht der Komponente (d), an Alkali- oder Erdalkalimetallionen. Besonders bevorzugt beträgt der Gehalt an Alkali- oder Erdalkalimetallionen in der Komponente (d) weniger als 0,005, mehr bevorzugt 0,003 und insbesondere 0,001 Gew.-%, bezogen auf das Gesamtgewicht der Komponente (d).

Vorzugsweise enthalten die Komponenten (c) und (d) weniger als 0,01 Gew.-%, bezogen auf das Gesamtgewicht der Komponenten (c) und (d), an Alkali- oder Erdalkalimetallionen. Besonders bevorzugt beträgt der Gehalt an Alkali- oder Erdalkalimetallionen in den Komponenten (c) und (d) weniger als 0,005, mehr bevorzugt 0,003 und insbesondere 0,001 Gew.-%, bezogen auf das Gesamtgewicht der Komponenten (c) und (d).

Weiter bevorzugt enthalten die Komponenten (c), (d) und (e) weniger als 0,01 Gew.-%, bezogen auf das Gesamtgewicht der Komponenten (c), (d) und (e), an Alkali- oder Erdalkalimetallionen. Besonders bevorzugt beträgt der Gehalt an Alkali- oder Erdalkalimetallionen in den Komponenten (c), (d) und (e) weniger als 0,005, mehr bevorzugt 0,003 und insbesondere 0,001 Gew.-%, bezogen auf das Gesamtgewicht der Komponenten (c), (d) und (e).

Als Füllstoffe und weitere Additive (e) können übliche Füllstoffe, und sonstige Zusatzstoffe, wie Additive zur Wasseradsorption, Flammschutzmittel, Hydrolyseschutzmittel, Antioxidantien und interne Trennmittel eingesetzt werden. Solche Substanzen sind beispielsweise in "Kunststoffhandbuch, Band 7, Polyurethane", Carl Hanser Verlag, 3. Auflage 1993, Kapitel 3.4.4 und 3.4.6 bis 3.4.11 genannt.

Als Füllstoffe, insbesondere verstärkend wirkende Füllstoffe, sind die an sich bekannten, üblichen organischen und anorganischen Füllstoffe, Verstärkungsmittel usw. zu verstehen. Im Einzelnen seien beispielhaft genannt: anorganische Füllstoffe wie silikatische Mineralien, beispielsweise Quarzmehle, Schichtsilikate, wie Antigorit, Serpentin, Hornblenden, Amphibole, Chrisotil, und Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Quarzmehle, Aluminiumsilikat und Copräzipitate aus Bariumsulfat und Aluminiumsilikat sowie natürliche und synthetische faserförmige Mineralien wie Wollastonit, Metall- und Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Vorzugsweise werden als Füllstoffe solche mit einem mittleren Teilchendurchmesser von 0,1 bis 500, besonders bevorzugt von 1 bis 100 und insbesondere von 1 bis 10 µm eingesetzt. Dabei wird unter Durchmesser bei nicht kugelförmigen Teilchen deren Ausdehnung entlang der kürzesten Raumachse verstanden. Bei nicht kugelförmigen Teilchen, beispielsweise Fasern, wie Glasfasern, ist die Ausdehnung entlang ihrer längsten Raumachse vorzugsweise kleiner 500 µm, besonders bevorzugt kleiner 300 µm. Bevorzugt werden als Füllstoffe Glasfasern oder Quarzmehle eingesetzt. Weiter können auch vernetzte Füllstoffe, beispielsweise Gewebematten, wie Glasfasermatten, Carbonfasermatten oder Naturfasermatten als Füllstoffe eingesetzt werden. Diese Füllstoffe werden im Rahmen der Erfindung als Verstärkungsmittel bezeichnet.

Die anorganischen und organischen Füllstoffe können einzeln oder als Gemische verwendet werden und werden der Reaktionsmischung vorteilhafterweise in Mengen von 0,5 bis 30 Gew.-%, vorzugsweise 1 bis 20 Gew.-%, bezogen auf das Gewicht der Komponenten (a) bis (e), einverleibt.

Als Additive zur Wasseradsorption werden vorzugsweise Aluminosilikate, ausgewählt aus der Gruppe der Natriumaluminasilikate, Kaliumaluminasilikate Calciumaluminasilikate Cäsiumaluminasilikate, Bariumaluminasilikate, Magnesiumaluminasilikate Strontiumaluminasilikate Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Vorzugsweise hat das Additivs zur Wasserabsorption eine mittlere Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ångstroem. Neben den anorganischen Additiven zur Wasseradsorption können auch bekannte organische Additive zur Wasseradsorption, wie Orthoformiate, beispielsweise Triisopropylorthoformiat, eingesetzt werden.

Wenn ein Additiv zur Wasserabsorption zugegeben wird, geschieht dies vorzugsweise in Mengen größer einem Gewichtsteil, besonders bevorzugt im Bereich von 1,2 bis 2 Gewichtsteilen, bezogen auf das Gesamtgewicht des Kunststoffsystems.

Sollen Schaumstoffe hergestellt werden, können anstelle von Wasserfängern auch in der Polyurethanchemie übliche chemische und/oder physikalische Treibmittel eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. Vorzugsweise wird kein Treibmittel zugegeben.

Als Flammschutzmittel können im Allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. , Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyurethan-Polyisocyanurat_Schaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 60 Gew.-%, besonders bevorzugt von 5 bis 50 Gew.-%, insbesondere von 5 bis 40 Gew.-%, bezogen auf das Gesamtgewicht der Komponenten (b) bis (e) verwendet. Als interne Trennmittel können alle bei der Herstellung von Polyurethanen üblichen Trennmittel verwendet werden, beispielsweise in Diamin gelöste Metallsalze, wie Zinkstearat, und Derivate von Polyisobutylenbersteinsäure.

Ein erfindungsgemäßes Kunststoffsystem weist vorzugsweise weniger als 0,5 Gew.-%, bevorzugt weniger als 0,3 Gew.-% Wasser, bezogen auf das Gesamtgewicht der Komponenten (b) bis (e), auf.

Die Herstellung der erfindungsgemäßen Polyurethan-Polyisocyanuratverbindungene erfolgt durch Vermischen der Komponenten (a) bis (d) und gegebenenfalls (e) zu einer Reaktionsmischung und Ausreagieren der Reaktionsmischung zu der Polyurethan-Polyisocyanuratverbindung. Dabei wird im Rahmen der Erfindung die Mischung der Komponenten (a) bis (e) bei Reaktionsumsätzen kleiner 90 %, bezogen auf die Isocyanatgruppen, als Reaktionsmischung bezeichnet. Einzelne Komponenten können dabei bereits vorgemischt sein. So können beispielsweise Polyisocyanate (a) und die Mischung, erhältlich durch Einbringen eines Alkali- oder Erdalkalimetallsalzes in eine Urethangruppen enthaltende Verbindung (b) vorgemischt werden sofern die Komponente (b) keine gegenüber Isocyanaten reaktive Gruppen aufweist. Ebenfalls können die Komponenten (c), (d), und gegebenenfalls (e) vorgemischt werden. Sollte die Komponente (b) keine Isocyanatgruppen enthalten, kann auch die Komponente (b) zu dieser Mischung zugegeben werden. Vorzugsweise werden die eine oder mehreren Epoxidgruppen enthaltende Verbindungen (c) und die eine oder mehreren Verbindungen mit mindestens zwei gegenüber Isocyanat reaktiven Gruppen, enthaltend Verbindungen mit NH₂ und/oder primären OH-Gruppen (d) und gegebenenfalls Füllstoffe und Additive (e) vor dem Vermischen mit Isocyanat (a) zu einer Polyolkomponente vermischt.

Erfindungsgemäße Reaktionsmischungen weisen eine lange offene Zeit bei 25° C auf, beispielsweise von mehr als 60 Minuten, bevorzugt von mehr als 90 Minuten und besonders bevorzugt von mehr als 120 Minuten. Die Offene Zeit wird dabei wie oben beschrieben über den Viskositätsanstieg ermittelt. Bei Temperaturerhöhung auf Temperaturen größer 70° C, bevorzugt größer 80 bis 200° C und besonders bevorzugt auf 90 bis 150° C härtet die erfindungsgemäße Reaktionsmischung schnell aus, beispielsweise in weniger als 50 Minuten, vorzugsweise in weniger als 30 Minuten, besonders bevorzugt in weniger als 10 Minuten und insbesondere in weniger als 5 Minuten. Dabei wird im Rahmen der Erfindung unter Aushärtung einer erfindungsgemäßen Reaktionsmischung die Erhöhung der Anfangsviskosität auf das 10-fache der Anfangsviskosität verstanden. Dabei ist die Differenz zwischen der Offenen Zeit bei 25° C und der Offenen Zeit bei 130° C vorzugsweise mindestens 40 Minuten, bevorzugt mindestens eine Stunde und besonders bevorzugt mindestens 2 Stunden.

Der Isocyanatindex ist für ein erfindungsgemäßes Verfahren größer als 150, beispielsweise von 160 bis 5.000, vorzugsweise von 180 bis 1000. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel und Verbindungen mit Epoxidgruppen, verstanden, nicht aber die Isocyanatgruppe selbst.

Vorzugsweise wird mit dem erfindungsgemäßen Verfahren ein kompaktes Material erhalten, das heißt, es wird kein Treibmittel zugegeben. Geringe Treibmittelmengen, beispielsweise geringe Wassermengen, die über Luftfeuchtigkeit beim Verarbeiten in die Reaktionsmischung oder die Ausgangskomponenten Einkondensieren sind dabei nicht umfasst. Als kompakte Polyurethan-Polyisocyanuratverbindung wird eine Polyurethan-Polyisocyanuratverbindung bezeichnet, die im Wesentlichen frei von Gaseinschlüssen ist. Vorzugsweise ist die Dichte einer kompakten Polyurethan-Polyisocyanuratverbindung größer 0,8 g/cm³, besonders bevorzugt größer 0,9 g/cm³ und insbesondere größer 1,0 g/cm³.

Die erfindungsgemäßen Polyurethan-Polyisocyanuratverbindungen können für alle Arten von Polyisocyanat-Polyadditionsprodukten eingesetzt werden zu deren Herstellung eine lange offene Zeit und eine schnelle Aushärtung der Reaktionsmischung vorteilhaft sind. Dabei wird bei einem Isocyanatindex von größer 150, besonders bevorzugt von größer 250 gewählt, wenn die erhaltenen Polyurethan-Polyisocyanuratverbindungen eine besondere Temperaturstabilität und Flammfestigkeit aufweisen sollen. Dabei weisen die erfindungsgemäßen Polyisocyanat-Polyadditionsprodukte eine besonders hohe Glasübergangstemperatur von vorzugsweise mindestens 150° C, besonders bevorzugt mindestens 170° C und insbesondere mindestens 200° C, eine hohe Wärmeformbeständigkeit (Heat deflection Temperature (HDT)) und hervorragende mechanische Eigenschaften auf. Dabei wird die Glastemperatur mittels Dynamisch Mechanischer Analyse (DMA) bei einer Frequenz f = 1 Hz nach DIN EN ISO 6721-1:2011 bestimmt und die Glasübergangstemperatur Tg anhand des Maximums des Verlustfaktors tan d und des Verlustmoduls G" bewertet. Die Wärmeformbeständigkeit wird nach DIN EN ISO 75 bestimmt. Vorzugsweise wird das erfindungsgemäße Verfahren zur Herstellung von Faserverbundbauteilen eingesetzt. Dazu werden übliche Fasern, wie Glasfasern oder Kohlefasern, insbesondere Fasermatten, mit der Reaktionsmischung benetzt. Weiter kann die erfindungsgemäße Reaktionsmischung verwendet werden, um Wabenverbundmaterialien herzustellen, wie Türelemente im Automobilbau. Auch kann die Reaktionsmischung im Vakuuminfusionsverfahren zur Herstellung von strukturellen Sandwichbauteilen, wie Fahrzeugteilen, beispielsweise Flugzeugteilen oder Automobilaußenverkleidungen, oder Flügeln für Windenergieanlagen eingesetzt werden. Weitere Verwendungen sind beispielsweise Pultrusion, Faserwickelverfahren und alle Anwendungen, bei denen eine lange offene Zeit und schnelles Aushärten der Kunststoffkomponente sowie gute mechanische Eigenschaften, wie eine hohe Schlagzähigkeit vorteilhaft ist. Dabei können diese Gegenstände nach üblichen Verfahren in üblichen, vorzugsweise beheizbaren Formwerkzeugen hergestellt werden.

Besonders vorteilhaft für die Verarbeitung sind die besonders hohen Differenzen zwischen der offenen Zeit bei Raumtemperatur und der offenen Zeit bei 120° C. Diese beträgt vorteilhafterweise bei Raumtemperatur mindestens 30 Minuten und bei 120° C möglichst weniger als 60 Sekunden. Weiterhin sind lange offene Zeiten und schnelle Entformzeiten bei 120° C vorteilhaft für Faserimprägnieranwendungen. Besonders geeignet sind offene Zeiten > 30 s und Entformzeiten < 90 s bei 120° C.

Vorzugsweise werden bis auf das in Komponente (b) eingesetzte Alkali- oder Erdalkalimetallsalz im erfindungsgemäßen Verfahren keine Verbindungen zur Beschleunigung der Isocyanat-Polyol-Reaktion und insbesondere keine der üblichen Polyurethankatalysatoren auf Basis von Verbindungen mit tertiären Amingruppen, oder Polyisocyanuratkatalysatoren, wie Kaliumacetat, eingesetzt. Die erfindungsgemäßen Polyurethan-Polyisocyanuratverbindungen zeichnen sich durch hervorragende mechanische Eigenschaften aus, die innerhalb von weiten Grenzen variiert werden können.

Gegenstand der vorliegenden Erfindung ist weiter die Polyurethan-Polyisocyanuratverbindung, erhältlich nach einem erfindungsgemäßen Verfahren und die Verwendung einer erfindungsgemäßen Polyurethan-Polyisocyanuratverbindung zur Herstellung einer Vielzahl von Kompositmaterialien, beispielsweise in Resin Transfer Moulding (RTM), Resin Injection Moulding (RIM) oder Structural Reaction Injection Molding (SRIM), um beispielsweise Karosseriebauteile für Fahrzeuge, Tür oder Fensterrahmen oder wabenverstärkte Bauteile herzustellen, in Vakuum assistierter Harzinfusion um beispielsweise Strukturbauteile für Fahrzeuge oder Windkraftanlagen herzustellen, in Filament Winding um beispielsweise Druckstabile Behältnisse oder Tanks herzustellen, in Rotational Casting um z.B. Rohre und Rohrbeschichtungen herzustellen und in Pultrusion, um beispielsweise Tür- und Fensterprofile, faserverstärkte Bauteile für Fahrzeuge, Windkraftanlagen, Antennen oder Leitern und Bewehrungsstäbe für Beton herzustellen. Des Weiteren kann die erfindungsgemäße Polyurethan-Polyisocyanuratverbindung für die Herstellung von Prepregs für beispielsweise Sheet Moulding Compounding (SMC) oder Bulk Molding Compound (BMC) verwendet werden. Die Verbundstoffe mit der erfindungsgemäß hergestellten Polyurethan-Polyisocyanuratverbindung können des Weiteren für beispielsweise großstückzahlige Produktion von Teilen für Automobile, Bauteile für Züge, Luft- und Raumfahrt, marine Anwendungen, Windkraftanlagen, Strukturbauteile, Klebstoffe, Packaging, Verkapselungsstoffe und Isolatoren verwendet werden. Die erfindungsgemäße Polyurethan-Polyisocyanuratverbindung kann auch ohne Faserverstärkung als reines Gussmaterial verwendet werden, beispielsweise als Klebstoffe oder Coating für beispielsweise Rohrbeschichtungen. Vorzugsweise wird die nach einem erfindungsgemäßen Verfahren hergestellte Polyurethan-Polyisocyanuratverbindung zur Herstellung von Karosseriebauteilen für Fahrzeuge, wie Stoßstangen, Kotflügel oder Dachteile, eingesetzt.

Überraschenderweise wurde gefunden, dass die Komponente (b) in geringerer Menge als die bi- oder polydentalen Komplexe aus dem Stand der Technik enthalten sein müssen. Dabei werden im Gegensatz zu den in WO 10121898, WO 12103965 WO 13098034 und WO 13143841 beschriebenen Systemen ausschließlich monodentale Urethangruppen der Form R-NH-CO-O-R' bezüglich des Salz-Anions und des Salz-Kations verwendet, wobei R ungleich Wasserstoff ist. Dies führt zu einer um den Faktor 10 erhöhten Effektivität, bezogen auf die Konzentration des Katalysators oder zu einer um den Faktor 3 erhöhte Effektivität bezüglich der offenen Zeit bei 130° C. Eine mögliche Erklärung dafür könnte sein, dass die bi- oder polydentalen Komplexe aus dem Stand der Technik in der Lage sind, die Salzverbindungen relativ stark über elektrostatische Wechselwirkungen zu binden.

Im Folgenden soll die gegenwärtige Erfindung anhand von Beispielen verdeutlicht werden:

**Ausgangsmaterialien:**

| | |
|---|---|
| Polyol 1 | Glycerin gestartetes Polyetherpolyol auf Basis von Propylenoxid und endständigem Ethylenoxid, einer OH-Zahl von 35 mg KOH/g, einem Gehalt an primären OH Gruppen von 72 % bezogen auf alle OH-Gruppen und einer Alkalinität von 10 ppm |
| Polyol 2 | Glycerin gestartetes Polyetherpolyol auf Basis von Propylenoxid und endständigem Ethylenoxid, einer OH-Zahl von 30 mg KOH/g, einem Gehalt an primären OH Gruppen von 100 % bezogen auf alle OH-Gruppen und einer Alkalinität von 465 ppm |
| Polyol 3 | Propylenglycol gestartetes Polyetherpolyol auf Basis von Propylenoxid und endständigem Ethylenoxid, einer OH-Zahl von 30 mg KOH/g und einem Gehalt an primären OH-Gruppen von 83 % und einer Alkalinität von 4 ppm |
| Polyol 4 | Glycerin gestartetes Polyetherpolyol auf Basis von Propylenoxid, einer OH-Zahl von 805 und einem Gehalt an sekundären OH-Gruppen von 100 % bezogen auf alle OH-Gruppen und einer Alkalinität von 100 ppm |
| Polyol 5 | Diethylenglycol |
| Polyol 6 | DMC katalysiertes Polyetherpolyol, enthaltend Polypropylenglycol als Starter, auf Basis von Propylenoxid, einer OH-Zahl von 28 mg KOH/g und einem Gehalt an sekundären OH-Gruppen von 100 % bezogen auf alle OH-Gruppen und einer Alkalinität von 0 ppm. |
| Polyol 7 | DMC katalysiertes Polyetherpolyol, Rizinusöl gestartet, auf Basis von Propylenoxid/Ethylenoxid und endständigem Propylenoxid, einer OH-Zahl von 50 mg KOH/g und einem Gehalt an sekundären OH-Gruppen von 100 % bezogen auf alle OH-Gruppen und einer Alkalinität von 0 ppm. |
| Polyol 8 | Propylenglycol gestartetes Polyetherpolyol auf Basis von Propylenoxid, einer OH-Zahl von 55 mg KOH/g, einem Gehalt an sekundären OH-Gruppen von 100 % bezogen auf alle OH-Gruppen und einer Alkalinität von 4 ppm |
| Polyol 9 | DMC katalysiertes, Propylenglycol gestartetes Polyetherpolyol auf Basis von Propylenoxid, einer OH-Zahl von 55 mg KOH/g und einem Gehalt an sekundären OH-Gruppen von 100 % bezogen auf alle OH-Gruppen und einer Alkalinität von 0 ppm. |
| Polyol 10 | Dipropylenglycol |
| DGE 1 | Bisphenol A basierter Diglycidylether, z.B. Araldite GY 250 der Fa. Huntsman |
| DGE 2 | Polypropylenglycoldiglycidyl ether |
| ZM1 | Reaktionsprodukt bestehend aus Iso 3 mit einem monofunktionalen Polyethylenoxid mit einem zahlenmittleren Molekulargewicht von 500 g/mol, erhältlich unter dem Handelsnamen "Pluriol® A 500 E" der Fa. BASF, gemischt mit 0,70 eq. LiCI bezogen auf Anzahl Urethanbindungen des Prepolymers |
| ZM2 | nicht erfindungsgemäße Mischung aus LiCI und Harnstoff-Prepolymer, erhältlich durch Reaktion von Jeffamin M600 und Iso 3 sowie 0,70 eq. LiCI, bezogen auf Anzahl Harnstoffbindungen des Praepolymers wie in WO10121898 beschrieben. |
| ZM3 | nicht erfindungsgemäße Mischung aus Kaliumacetat (40 %) gelöst in Monoethylenglycol (60%) |
| Iso 1 | Prepolymer aus 4,4'-Diphenylmethandiisocyanat (MDI) und Dipropylenglycol, NCO-Gehalt 22,9 Gew.-% |
| Iso 2 | Diphenylmethandiisocyanat (MDI) mit höherkernigen Homologen, z.B. "Lupranat® M20" der Fa. BASF, NCO-Gehalt 31,5 % |
| Iso 3 | Carbodiimidmodifiziertes 4,4'-Diphenylmethandiisocyanat (MDI), NCO-Gehalt 29,5 % |

Herstellung ZM 1: Das Monool wurde in einem Glaskolben vorgelegt und unter kräftigem Rühren mittels eines Magnetrührers das Isocyanat zugegeben. Während der gesamten Synthese wurde die Temperatur mittels Temperaturfühler überwacht. Dann wurde auf 70° C erhitzt bis die Reaktion startete. Erhitzte sich die Reaktion von selbst, wurde mit Eisbad gekühlt, verhielt sich die Reaktion eher träge wurde die Temperatur weiterhin auf 90° C erhöht und weitere 30 min gerührt. Nach Ende der Reaktion wurde das Reaktionsgemisch auf Raumtemperatur abgekühlt. Man erhält ein viskoses Öl. Anschließend wurde das erhaltene Öl mit der entsprechenden, in Ethanol gelösten Menge LiCI vermischt und auf 70° C erhitzt und für 30 min bei dieser Temperatur gerührt. Anschließend wurde das Reaktionsgemisch abgekühlt und überschüssiges Ethanol im Rotationsverdampfer abgezogen. Man erhielt ein viskoses Öl.

Gemäß Tabelle 1 wurden jeweils eine Polyol- und eine Isocyanatkomponente durch Vermischen der angegebenen Komponenten hergestellt. Die Mengenangaben sind Gewichtsteile, jeweils bezogen auf die Polyolkomponente (A-Komponente) oder die Isocyanatkomponente (B-Komponente). Anschließend wurden die jeweiligen Polyol- und Isocyanatkomponenten bei dem angegebenen Mischungsverhältnis vermischt. Diese Mischung wurde bei 120° C in einer Form zur Polyurethan-Polyisocyanuratverbindung umgesetzt. An den so hergestellten Polyurethan-Polyisocyanuratverbindungen wurden die angegebenen mechanischen Eigenschaften bestimmt.

**Tabelle 1**

| | Beispiel 1 | Beispiel 2 | Vergleich 1 | Vergleich 2 | Vergleich 3 | Vergleich 4 | Vergleich 5 | Vergleich 6 | Vergleich 7 | Vergleich 8 | Vergleich 9 | Beispiel 3 | Beispiel 4 | Beispiel 5 | Vergleich 10 |
|---|---|---|---|---|---|---|---|---|---|---|---|---|---|---|---|
| Polyol 1 | 70 | | | | | | | | | 70 | 70 | 70 | 70 | 70 | 70 |
| Polyol 2 | | | 70 | | | | | | | | | | | | |
| Polyol 3 | | 70 | | | | | | | | | | | | | |
| Polyol 4 | | | | 70 | | | | | | | | | | | |
| Polyol 5 | 15 | 15 | 15 | 15 | 15 | 15 | 15 | 15 | | 15 | 15 | 15 | 15 | 15 | 15 |
| Polyol 6 | | | | | | | 70 | | | | | | | | |
| Polyol 7 | | | | | | | | 70 | | | | | | | |
| Polyol 8 | | | | | 70 | | | | 70 | | | | | | |
| Polyol 9 | | | | | | 70 | | | | | | | | | |
| Polyol 10 | | | | | | | | | 15 | | | | | | |
| DGE 1 | 15 | 15 | 15 | 15 | 15 | 15 | 15 | 15 | 15 | 14,85 | 15 | | 15 | 15 | 15 |
| DGE 2 | | | | | | | | | | | | 15 | | | |
| ZM3 | | | | | | | | | | 0,15 | | | | | |
| Sum A | 100 | 100 | 100 | 100 | 100 | 100 | 100 | 100 | 100 | **100** | **100** | 100 | 100 | 100 | **100** |
| Iso 1 | 49 | 49 | 49 | 49 | 49 | 49 | 49 | 49 | 49 | 50 | 49 | 49 | 98 | | 50 |
| Iso 2 | 49 | 49 | 49 | 49 | 49 | 49 | 49 | 49 | 49 | 50 | 49 | 49 | | 98 | 50 |
| ZM1 | 2 | 2 | 2 | 2 | 2 | 2 | 2 | 2 | 2 | | | 2 | 2 | 2 | |
| ZM2 | | | | | | | | | | | 2 | | | | |
| Sum B | 100 | 100 | 100 | 100 | 100 | 100 | 100 | 100 | 100 | **100** | **100** | 100 | 100 | 100 | **100** |
| Mischungsverhältnis A:B [Gew.-Tl] | 100: 500 | 100: 500 | 100: 500 | 100: 500 | 100 :500 | 100: 500 | 100: 500 | 100: 500 | 100: 500 | 100 : 500 | 100 : 500 | 100: 500 | 100: 500 | 100: 500 | 100 : 500 |
| Index | 757,2 | 769,8 | 304,1 | 229,6 | 889 | 891,7 | 988,8 | 894,9 | 1056 | 768,3 | 757,2 | 757,9 | 637,7 | 876,6 | 772,4 |
| Alkalimetallgehalt in der A-Komp. [ppm] | 10,8 | 6,6 | 329,3 | 73,8 | 6,6 | 3,8 | 3,8 | 3,8 | 6,6 | 16,9 | 10,8 | 10,8 | 10,8 | 10,8 | 10,8 |
| Zugfestigkeit [N/mm²] nach DIN EN ISO 527 | 71,4 | 41,1 | n.b. | n.b. | 77,6 | n.b. | n.b. | n.b. | 71,5 | 32,3 | 63,5 | 61,2 | 69,3 | 58,5 | n.m. |
| Bruchdehnung [%] nach DIN EN ISO 527 | 5,6 | 2,6 | n.b. | n.b. | 8,1 | n.b. | n.b. | n.b. | 5,8 | 1,8 | 6,0 | 4,8 | 6,7 | 3,8 | n.m. |
| Tg [° C] mittels DMA max G"/max tan delta | 215/ 225 | 215/ 235 | n.b. | n.b. | 130/ 165 | n.b. | n.b. | n.b. | 155/ 165 | 105/ 125 | 155/ 170 | >250 | 190/ 215 | >250 | n.m. |
| Wärmeformbeständigkeit nach DIN EN ISO 75 [° C] | 168 | n.b. | n.b. | n.b. | n.b. | n.b. | n.b. | n.b. | n.b. | 109 | 138 | n.b. | n.b. | n.b. | n.m. |
| E-Modul [N/mm²] nach DIN EN ISO 527 | 2522 | n.b. | n.b. | n.b. | 2513. | n.b. | n.b. | n.b. | 2419 | 2325 | 2449 | n.b. | n.b. | n.b. | n.m. |
| Offene Zeit bei RT [min] | 80 | 104 | 3 | 25 | 88 | 166 | 124 | 113 | 2050 | 21 | 616 | 31 | 585 | 383 | > 2500* |
| Offene Zeit bei 120° C [s] | 44 | 37 | 12/ | 38 | 37 | 40 | 31 | 36 | 45 | 98 | 186 | 31 | 37 | 56 | > 90.* |
| Entformzeit bei 120° C [s] | 83 | 84 | 46 | 76 | 79 | 99 | 82 | 84 | 110 | 180 | 240 | 78 | 85 | 94 | n.m. |
| Differenz zwischen OZ bei RT und 120° C [s] | 4756 | 6203 | 158 | 1462 | 5201 | 9861 | 7409 | 6744 | 1228 93 | 1162 | 36774 | 1829 | 35063 | 22924 | n.b. |
| Offene Zeit bei 120 ° C [s] nach 2 Wochen Lagerung bei RT | 37/8 1 | 42/9 0 | 19/59 | 36/7 6 | 44/97 | 43/110 | 32/84 | 33/83 | 46/1 20 | n.b. | gleiche A-Komp. wie Bsp 1 | 30/7 7 | gleiche A-Komp. wie Bsp 1 | gleiche A-Komp. wie Bsp 1 | gleiche A-Komp. wie Bsp 1 |
| Lagerstabile Formulierung Ja/Nein | ja | ja | nein, keine konstante OZ | ja | nein, inhomogene A | nein, inhomogene A | nein, inhomogene A | nein, inhomogene A | ja | nein | ja | ja | ja | ja | n.m. |

| | | | | | | | | | | | | | | | |
|---|---|---|---|---|---|---|---|---|---|---|---|---|---|---|---|
| Dabei bedeutet: n.b.: nicht bestimmt n.m.: nicht messbar * kein definierter Übergang von flüssig zu fest | | | | | | | | | | | | | | | |

Die Lagerstabilität wurde durch 2 Wochen Lagerung bei Raumtemperatur ermittelt und anhand der OH-Zahl sowie der Homogenität der Probe beurteilt.

Tabelle 1 zeigt, dass nur bei Einsatz von Polyolen mit primären OH-Gruppen Polyurethan-Polyisocyanurate mit hervorragender Mechanik und hohen Glastemperaturen erhalten werden, wenn die Alkalinität der eingesetzten Polyole gering ist. Die Alkalinität wurde hierbei nach ASTM D6437 EN bestimmt. Polyole mit überwiegend sekundären OH-Gruppen führen zu spröden, nicht ausreagierten Produkten, die auf Grund ihrer Sprödigkeitbereits bei der Probenpräparation zerbrechen oder deren Glasübergangstemperatur in Kombination mit den mechanischen Werten nicht vorteilhaft ist.

Ohne Katalysatorzugabe härtet die Reaktionsmischung nicht richtig aus (Vergleich 10). Mit einem herkömmlichen Katalysator (Vergleich 8) wird zwar eine Aushärtung erhalten, die erhaltenen Polyurethan-Polyisocyanurate weisen aber eine eher mäßige mechanische Eigenschaften und eine relativ geringe Glastemperatur auf. Ohne jegliche Katalyse (Vergleich 10) wird keine Aushärtung erzielt.

Mit dem in WO10121898 beschriebenen ZM2 (Vergleich 9), bestehend aus LiCI und Harnstoff-Prepolymer, erhältlich durch Reaktion von Jeffamin M600 und Iso 3 sowie 0,50 eq. LiCI, bezogen auf Anzahl Harnstoffbindungen des Praepolymers wie entsprechend in WO10121898 beschrieben, werden zwar ebenfalls Polyurethan-Polyisocyanurate mit guter Mechanik und hohen Glastemperaturen erhalten, diese sind aber gegenüber Beispiel 1, das bis auf das Zusatzmittel aus den identischen Ausgangssubstanzen erhalten wurde, insbesondere für Zugfestigkeit und Wärmeformbeständigkeit deutlich verschlechtert. Auch die ermittelten Glastemperaturen sind gegenüber Beispiel 1 wesentlich geringer. Weiter sind die offenen Zeiten und Entformzeiten bei gleicher Menge ZM deutlich langsamer, was zu einer deutlichen Verlängerung der Entformzeit führt und damit für die Anwendung weniger bevorzugt ist.

## Patentansprüche

1. Verfahren zur Herstellung von Polyurethan-Polyisocyanuratverbindungen, bei dem man
a) Polyisocyanat mit
b) einer Mischung, erhältlich durch Einbringen eines Alkali- oder Erdalkalimetallsalzes in eine Urethangruppen enthaltende Verbindung R-NH-CO-O-R', wobei R ungleich Wasserstoff und ungleich COR" ist,
c) eine oder mehrere Epoxidgruppen enthaltende Verbindungen und
d) eine oder mehrere Verbindungen mit mindestens zwei gegenüber Isocyanat reaktiven Gruppen, enthaltend Verbindungen mit NH₂ und/oder primären OH-Gruppen und gegebenenfalls
e) Füllstoffe und weitere Additive
zu einer Reaktionsmischung vermischt und zu der Polyurethan-Polyisocyanuratverbindung ausreagieren lässt, wobei der molare Gehalt an Alkali- und/oder Erdalkalimetallionen in der Reaktionsmischung pro mol Urethangruppe in der Verbindung (b) 0,0001 bis 3,5 beträgt und der Isocyanatindex größer als 150 ist.

2. Verfahren nach Anspruch 1, **dadurch gekennzeichnet, dass** der molare Gehalt der primären OH und/oder NH2-Gruppen, bezogen auf die Summe aller -NH₂ und -OH Gruppen in der Komponente (d), mindestens 50 % beträgt.

3. Verfahren nach Anspruch 1 oder 2, **dadurch gekennzeichnet, dass** die Verbindung mit mindestens zwei gegenüber Isocyanat reaktiven Gruppen, enthaltend Verbindungen mit NH₂ und/oder primären OH-Gruppen (d) Polyetherpolyol mit mindestens 50 % primären OH-Gruppen enthält.

4. Verfahren nach einem der Ansprüche 1 bis 3, **dadurch gekennzeichnet, dass** der Anteil an Polyester mit mindestens 50 % primären -OH-Gruppen an der Komponente d) kleiner als 50 Gew.-% ist.

5. Verfahren nach einem der Ansprüche 1 bis 4, **dadurch gekennzeichnet, dass** man die eine oder mehrere Epoxidgruppen enthaltende Verbindungen (c) und die eine oder mehreren Verbindungen mit mindestens zwei gegenüber Isocyanat reaktiven Gruppen, enthaltend Verbindungen mit NH₂ und/oder primären OH-Gruppen (d) und gegebenenfalls Füllstoffe und Additive (e) vor dem Vermischen mit Isocyanat (a) zu einer Polyolkomponente vermischt

6. Verfahren nach Anspruch 5, **dadurch gekennzeichnet, dass** Polyisocyanat (a) und die Mischung, erhältlich durch Einbringen eines Alkali- oder Erdalkalimetallsalzes in eine Urethangruppen enthaltende Verbindung (b) vor dem Vermischen mit der Polyolkomponente zu einer Isocyanatkomponente vermischt.

7. Verfahren nach einem der Ansprüche 1 bis 6, **dadurch gekennzeichnet, dass** als Polyisocyanat (a) ein erstes Polyisocyanat eingesetzt wird und die Urethangruppen enthaltende Verbindung in Komponente (b) ein Umsetzungsprodukt aus einem zweiten Polyisocyanat und einer Verbindung mit mindestens einer OH-Gruppe ist, wobei das erste und das zweite Isocyanat voneinander verschieden sind.

8. Verfahren nach einem der Ansprüche 1 bis 7, **dadurch gekennzeichnet, dass** das zweite Isocyanat eines oder mehrere Isomere oder Homologe des Diphenylmethandiisocyanats oder Prepolymere des Diphenylmethandiisocyanats enthält.

9. Verfahren nach einem der Ansprüche 1 bis 7, **dadurch gekennzeichnet, dass** das erste Polyisocyanat und das zweite Polyisocyanat identisch sind.

10. Verfahren nach einem der Ansprüche 1 bis 9, **dadurch gekennzeichnet, dass** die Epoxidgruppen enthaltende Verbindung zwei, drei oder mehr Epoxidgruppen pro Molekül enthält.

11. Verfahren nach einem der Ansprüche 1 bis 10, **dadurch gekennzeichnet, dass** die Komponente (b) erhalten wird durch Mischen von Polyisocyanat, einer Verbindung mit einer gegenüber Isocyanat reaktiven Gruppe und dem Alkali- oder Erdalkalimetallsalz.

12. Verfahren nach einem der Ansprüche 1 bis 11, **dadurch gekennzeichnet, dass** das Alkali- oder Erdalkalimetallsalz Lithiumchlorid ist.

13. Verfahren nach einem der Ansprüche 1 bis 12, **dadurch gekennzeichnet, dass** die eine oder mehrere Epoxidgruppen enthaltende Verbindungen in einer Menge eingesetzt werden, dass das Equivalentverhältnis von Epoxidgruppen der Verbindung (c) zu Isocyanatgruppe der Polyisocyanate (a) sowie gegebenenfalls in der Komplexverbindung (b) enthaltenen Isocyanatgruppen 0,05 bis 1,0 beträgt.

14. Polyurethan-Polyisocyanuratverbindung erhältlich nach einem der Ansprüche 1 bis 11.

15. Verwendung einer Polyurethan-Polyisocyanuratverbindung nach Anspruch 14 zur Herstellung von Karosseriebauteilen für Fahrzeuge.

## Claims

1. A process for preparing polyurethane-polyisocyanurate compounds by mixing
a) polyisocyanate with
b) a mixture obtainable by introducing an alkali metal or alkaline earth metal salt into a compound R-NH-CO-O-R' comprising urethane groups, where R is not hydrogen and is not COR",
c) compounds comprising one or more epoxide groups, and
d) one or more compounds having at least two isocyanate-reactive groups, comprising compounds having NH₂ and/or primary OH groups, and optionally
e) fillers and other additives,
to form a reaction mixture, and reacting said mixture to form the polyurethane-polyisocyanurate compound, wherein the molar amount of alkali metal and/or alkaline earth metal ions in the reaction mixture per mole of urethane group in the compound (b) is 0.0001 to 3.5 and the isocyanate index is greater than 150.

2. The process according to claim 1, wherein the molar amount of the primary OH and/or NH2 groups, based on the sum total of all -NH₂ and -OH groups in component (d), is at least 50%.

3. The process according to claim 1 or 2, wherein the compound having at least two isocyanate-reactive groups, comprising compounds having NH₂ and/or primary OH groups, (d), comprises polyether polyol having at least 50% of primary OH groups.

4. The process according to any of claims 1 to 3, wherein the fraction of polyester having at least 50% of primary -OH groups in component d) is less than 50 wt%.

5. The process according to any of claims 1 to 4, wherein the compounds (c) comprising one or more epoxide groups and the one or more compounds having at least two isocyanate-reactive groups, comprising compounds having NH₂ and/or primary OH groups, (d), and optionally fillers and additives (e) are mixed to form a polyol component before being mixed with isocyanate (a).

6. The process according to claim 5, wherein polyisocyanate (a) and the mixture obtainable by introducing an alkali metal or alkaline earth metal salt into a compound (b) comprising urethane groups are mixed to form an isocyanate component before being mixed with the polyol component.

7. The process according to any of claims 1 to 6, wherein a first polyisocyanate is used as polyisocyanate (a), and the compound comprising urethane groups in component (b) is a reaction product of a second polyisocyanate and a compound having at least one OH group, the first and second isocyanates being different from one another.

8. The process according to any of claims 1 to 7, wherein the second isocyanate comprises one or more isomers or homologues of diphenylmethane diisocyanate or prepolymers of diphenylmethane diisocyanate.

9. The process according to any of claims 1 to 7, wherein the first polyisocyanate and the second polyisocyanate are identical.

10. The process according to any of claims 1 to 9, wherein the compound comprising epoxide groups comprises two, three or more epoxide groups per molecule.

11. The process according to any of claims 1 to 10, wherein component (b) is obtained by mixing polyisocyanate, a compound having an isocyanate-reactive group, and the alkali metal or alkaline earth metal salt.

12. The process according to any of claims 1 to 11, wherein the alkali metal or alkaline earth metal salt is lithium chloride.

13. The process according to any of claims 1 to 12, wherein the compounds comprising one or more epoxide groups are used in an amount such that the equivalents ratio of epoxide groups in the compound (c) to isocyanate group in the polyisocyanates (a) and also isocyanate groups optionally comprised in the complex compound (b) is 0.05 to 1.0.

14. A polyurethane-polyisocyanurate compound obtainable according to any of claims 1 to 11.

15. The use of a polyurethane-polyisocyanurate compound according to claim 14 for producing bodywork components for vehicles.

## Revendications

1. Procédé pour la préparation de composés de type polyuréthane-polyisocyanurate, dans lequel on mélange
a) du polyisocyanate avec
b) un mélange, pouvant être obtenu par introduction d'un sel de métal alcalin ou de métal alcalino-terreux dans un composé contenant des groupes uréthane R-NH-CO-O-R', R n'étant pas égal à hydrogène et n'étant pas égal à COR",
c) un ou plusieurs composés contenant des groupes époxydes et
d) un ou plusieurs composés dotés d'au moins deux groupes réactifs envers isocyanate, contenant des composés comportant des groupes NH₂ et/ou OH primaire et éventuellement
e) des charges et d'autres additifs
pour donner un mélange réactionnel et on laisse réagir pour obtenir le composé de type polyuréthane-polyisocyanurate, la teneur molaire en ions de métal alcalin et/ou de métal alcalino-terreux dans le mélange réactionnel par mole de groupes uréthane dans le composé (b) étant de 0,0001 à 3,5 et l'indice d'isocyanate étant supérieur à 150.

2. Procédé selon la revendication 1, **caractérisé en ce que** la teneur molaire des groupes OH primaire et/ou NH₂, par rapport à la somme de tous les groupes -NH₂ et -OH dans le composant (d), est d'au moins 50 %.

3. Procédé selon la revendication 1 ou 2, **caractérisé en ce que** le composé comportant au moins deux groupes réactifs envers isocyanate, contenant des composés comportant des groupes NH₂ et/ou OH primaire (d) contient un polyéther polyol comportant au moins 50 % de groupes OH primaire.

4. Procédé selon l'une quelconque des revendications 1 à 3, **caractérisé en ce que** la proportion de polyester comportant au moins 50 % de groupes OH primaire dans le composant d) est inférieure à 50 % en poids.

5. Procédé selon l'une quelconque des revendications 1 à 4, **caractérisé en ce que** l'on mélange le ou les composé (s) contenant des groupes époxydes (c) et le ou les composé (s) comportant au moins deux groupes réactifs envers isocyanate, contenant des composés comportant des groupes NH₂ et/ou OH primaire (d) et éventuellement des charges et des additifs (e), avant le mélange avec l'isocyanate (a), pour donner un composant de polyol.

6. Procédé selon la revendication 5, **caractérisé en ce que** l'on mélange le polyisocyanate (a) et le mélange, pouvant être obtenu par introduction d'un sel de métal alcalin ou de métal alcalino-terreux dans un composé (b) contenant des groupes uréthane, avant le mélange avec le composant de polyol, pour donner un composant d'isocyanate.

7. Procédé selon l'une quelconque des revendications 1 à 6, **caractérisé en ce qu'**en tant que polyisocyanate (a), un premier polyisocyanate est utilisé et le composé contenant des groupes uréthane dans le composant (b) est un produit de transformation d'un deuxième polyisocyanate et d'un composé comportant au moins un groupe OH, le premier et le deuxième isocyanate étant différents l'un de l'autre.

8. Procédé selon l'une quelconque des revendications 1 à 7, **caractérisé en ce que** le deuxième isocyanate contient un ou plusieurs isomères ou homologues du diisocyanate de diphénylméthane ou des prépolymères du diisocyanate de diphénylméthane.

9. Procédé selon l'une quelconque des revendications 1 à 7, **caractérisé en ce que** le premier polyisocyanate et le deuxième polyisocyanate sont identiques.

10. Procédé selon l'une quelconque des revendications 1 à 9, **caractérisé en ce que** le composé contenant des groupes époxydes contient deux, trois ou plus de trois groupes époxyde par molécule.

11. Procédé selon l'une quelconque des revendications 1 à 10, **caractérisé en ce que** le composant (b) est obtenu par mélange de polyisocyanate, d'un composé comportant un groupe réactif envers isocyanate et d'un sel de métal alcalin ou de métal alcalino-terreux.

12. Procédé selon l'une quelconque des revendications 1 à 11, **caractérisé en ce que** le sel de métal alcalin ou de métal alcalino-terreux est le chlorure de lithium.

13. Procédé selon l'une quelconque des revendications 1 à 12, **caractérisé en ce que** le ou les composé(s) contenant des groupes époxydes est/sont utilisé(s) en une quantité telle que le rapport d'équivalent des groupes époxyde du composé (c) au groupe isocyanate du polyisocyanate (a) ainsi qu'éventuellement aux groupes isocyanate contenus dans le composé de complexe (b), est de 0,05 à 1,0.

14. Composé de type polyuréthane-polyisocyanurate pouvant être obtenu selon l'une quelconque des revendications 1 à 11.

15. Utilisation d'un composé de type polyuréthane-polyisocyanurate selon la revendication 14 pour la préparation d'éléments de carrosserie pour des véhicules.
